# EUROPEAN PATENT APPLICATION

(11) **EP 4 513 621 A1**
(43) Date of publication of application: **26.02.2025**
(21) Application number: 23217213.0
(22) Date of filing: 15.12.2023
(51) Int. Cl.: H01M 10/613, H01M 10/647, H01M 10/6556, H01M 50/103, H01M 50/276, H01M 50/342, H01M 50/358

(54) **BATTERY PACK**

(30) Priority: 24.08.2023 CN 202322293241 U
(71) Applicant: AESC Japan Ltd., Yokohama-Shi, Kanagawa 220-0012 (JP)
(72) Inventor: ZHOU, Zhongbin, Pudong New Area Shanghai, 201315 (CN); HE, Yafei, Pudong New Area Shanghai, 201315 (CN); BAI, Zixian, Pudong New Area Shanghai, 201315 (CN); ZHANG, Chengjie, Pudong New Area Shanghai, 201315 (CN)
(74) Representative: Becker, Eberhard

(57) **Abstract**

A battery pack (100) including a case (1) and cell assemblies (2) disposed in the case (1). The case (1) includes a heat exchange plate (5) and a bottom protection plate (7) disposed below the heat exchange plate (5). Each cell assembly (2) includes a plurality of cells (20), and an explosion-proof valve (4) is provided on a side of each cell (20) facing the heat exchange plate (5). The heat exchange plate (5) is provided with pressure relief through holes (51) corresponding to the explosion-proof valves (4). Reinforcing members (6) are provided between the heat exchange plate (5) and the bottom protection plate (7), and each reinforcing member includes a base portion (61) disposed on the bottom protection plate (7) and supporting portions connected to the base portion (61) and supported between the bottom protection plate (7) and the heat exchange plate (5).

## Description

### BACKGROUND

### Technical Field

The disclosure belongs to the technical field of energy storage equipment, and in particular, relates to a battery pack.

### Description of Related Art

Generally, the battery pack includes the case and the cell assemblies arranged in the case, and the explosion-proof valves are disposed on the cells of the cell assemblies. When one cell experiences thermal runaway, the internal pressure and temperature of the cell will exceed the safety threshold of the explosion-proof valve, causing the explosion-proof valve to open to relieve pressure in the cell. The high-temperature and high-pressure substances discharged from the explosion-proof valve need to be released in time and discharged out of the case in time to avoid triggering a chain thermal runaway of the surrounding cells and endangering the safety of the entire battery pack. Due to the requirements of lightweight and high energy density of battery packs, the structures inside the case, such as the bottom protection plate, are usually thin and light, and the strength, impact resistance, high temperature resistance and other properties of these structures are poor. When the high-temperature and high-pressure substances are discharged, once the high-temperature and high-pressure substances come into contact with the internal structures of the case, such as the bottom protection plate, these substances may easily corrode the case, damage the structure of the case, or even penetrate through the case, and safety hazards may thus occur.

### SUMMARY

In view of the abovementioned shortcomings found in the related art, the disclosure provides a battery pack aiming to the problem in the related art that after an explosion-proof valve of a cell is opened, high-temperature and high-pressure substances may easily corrode case.

To achieve the above and other related purposes, the disclosure provides a battery pack including a case and cell assemblies disposed in the case. The case includes a heat exchange plate and a bottom protection plate disposed below the heat exchange plate, and the cell assemblies are disposed on the heat exchange plate. Each of the cell assemblies includes a plurality of cells, an explosion-proof valve is provided on a side of each of the cells facing the heat exchange plate, and the heat exchange plate is provided with pressure relief through holes corresponding to the explosion-proof valves. Reinforcing members are disposed between the heat exchange plate and the bottom protection plate, and each of the reinforcing members includes a base portion and supporting portions connected to the base portion. The base portion is disposed on the bottom protection plate, and the supporting portions are supported between the bottom protection plate and the heat exchange plate. In a height direction of the battery pack, projection of the pressure relief through holes at least partially overlap projection of the base portions.

Optionally, the pressure relief through holes are arranged in sequence in a width direction of the battery pack, and each of the base portions is in a long strip shape and extends in the width direction of the battery pack.

Optionally, each of the supporting portions is in a long strip shape extending in the width direction of the battery pack. The supporting portions are provided on both sides of the base portion in a length direction of the battery pack, and each of the pressure relief through holes is disposed between the two supporting portions.

Optionally, lifting portions extending in the width direction of the battery pack are further provided on edges of the supporting portions close to the heat exchange plate, and the lifting portions are attached to the heat exchange plate.

Optionally, the two supporting portions are provided with the lifting portions, and the two lifting portions extend away from each other.

Optionally, an included angle between the base portion and each of the supporting portions is an obtuse angle.

Optionally, the two lifting portions extend toward each other, and the lifting portions are provided with receiving through holes corresponding to the pressure relief through holes.

Optionally, the number of the receiving through holes is less than the number of the pressure relief through holes and one of the receiving through holes is disposed corresponding to plural of the pressure relief through holes. Alternatively, the number of the receiving through holes corresponds to the number of the pressure relief through holes, and the receiving through holes and the pressure relief through holes are arranged in one-to-one.

Optionally, plural cell assemblies are provided, and the cell assemblies are disposed side by side in sequence in the length direction of the battery pack on the heat exchange plate. Plural reinforcing members are provided, and the reinforcing members are disposed side by side corresponding to the cell assemblies.

Optionally, separating beams extending in the width direction of the battery pack are provided on a side of the heat exchange plate away from the bottom protection plate, and each of the separating beams is located between the two adjacent cell assemblies.

Optionally, both ends of each of the separating beams are connected to an inner wall of the case, and a discharge through hole is provided on an outer wall of the case corresponding to an end portion of the separating beam. A discharge channel communicating with the discharge through hole is provided in the separating beam, and a communicating through hole communicating with the discharge channel is provided on the heat exchange plate corresponding to the separating beam. The heat exchange plate and the bottom protection plate communicate with the discharge through hole through the communicating through hole and the discharge channel.

Optionally, each of the separating beams includes a top portion extending in the width direction of the battery pack. The top portion is located above the heat exchange plate, and two side portions are provided on both sides of the top portion toward the heat exchange plate. The side portions are connected onto the heat exchange plate and are enclosed with the heat exchange plate and the top portion to form the discharge channel.

Optionally, the discharge through holes are provided with waterproof and breathable valves.

Optionally, in the height direction of the battery pack, the projection of the pressure relief through hole is within the projection of the base portion.

Optionally, a protection layer is provided on a side of the base portion facing the pressure relief through hole and/or a side of the supporting portion close to the base portion.

Optionally, the protection layer is made of mica plates.

Optionally, the reinforcing members are made of stainless steel.

Optionally, heat exchange flow channels for circulating a heat exchange medium are provided in the heat exchange plate.

To sum up, the battery pack provided by the disclosure provides the following beneficial effects. The cell assemblies are disposed on the heat exchange plate, and each of the cell assemblies includes plural cells. The explosion-proof valves of the cells are all disposed on the sides of the cells facing the heat exchange plate, and the heat exchange plate is provided with the pressure relief through holes corresponding to the explosion-proof valve. In this way, when the explosion-proof valves of the cells are opened, the high-temperature and high-pressure substances ejected by the explosion-proof valves may enter between the heat exchange plate and the bottom protection plate through the corresponding pressure relief through holes for pressure relief. The reinforcing members are disposed between the heat exchange plate and the bottom protection plate, and each of the reinforcing members includes the base portion and the supporting portions connected to the base portion. The base portions are disposed on the bottom protection plate, and the supporting portions are supported between the bottom protection plate and the heat exchange plate. In the height direction of the battery pack, the projections of the pressure relief through holes at least partially overlap the projections of the base portions. Therefore, the reinforcing members support and strengthen the bottom protection plate and the heat exchange plate. Further, after the high-temperature and high-pressure substances enter between the heat exchange plate and the bottom protection plate through the pressure relief through holes, in the height direction of the battery pack, the portions where the projections of the base portions of the reinforcing members overlap the projections of the pressure relief through holes may block the high-temperature and high-pressure substances. In this way, the direct corrosion and impact of the high-temperature and high-pressure substances on the bottom protection plate is reduced, and the risk of the bottom protection plate being penetrated is also lowered.

### BRIEF DESCRIPTION OF THE DRAWINGS

FIG. 1 is a schematic three-dimensional view of a structure of a battery pack according to an embodiment of the disclosure.
FIG. 2 is a schematic three-dimensional view of structures of a case and cell assemblies according to an embodiment of the disclosure.
FIG. 3 is a schematic top view of the structures of FIG. 2.
FIG. 4 is a schematic three-dimensional view of the structure of the case according to an embodiment of the disclosure.
FIG. 5 is a schematic three-dimensional view of the structure of one cell assembly according to an embodiment of the disclosure.
FIG. 6 is a schematic exploded view of the structure of the case according to an embodiment of the disclosure.
FIG. 7 is a schematic three-dimensional view of structures of a heat exchange plat and a bottom protection plate according to an embodiment of the disclosure.
FIG. 8 is a schematic cross-sectional view of the structure taken along A-A in FIG. 3.
FIG. 9 is a schematic local enlargement view of the structure in FIG. 8.
FIG. 10 is a schematic cross-sectional view of a structure of a discharge through hole according to an embodiment of the disclosure.
FIG. 11 is a schematic local enlargement view of the structure taken along B-B in FIG. 3.
FIG. 12 is a schematic cross-sectional view of a structure of a separating beam according to an embodiment of the disclosure.
FIG. 13 is a schematic local enlargement view of the structure taken along C-C in FIG. 3.
FIG. 14 is a first schematic view of a structure of a reinforcing member according to an embodiment of the disclosure.
FIG. 15 is a schematic local enlargement view of the structure in FIG. 14.
FIG. 16 is a second schematic view of the structure of the reinforcing member according to an embodiment of the disclosure.
FIG. 17 is a schematic local enlargement view of the structure in FIG. 16.
FIG. 18 is a third schematic view of the structure of the reinforcing member according to an embodiment of the disclosure.
FIG. 19 is a schematic local enlargement view of the structure in FIG. 18.
FIG. 20 is a schematic view of a structure of arrangement of mica plates according to an embodiment of the disclosure.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification.

It should be noted that the structures, scales, sizes, etc. shown in the accompanying drawings in the specification are only to be used together with the content disclosed in the specification for a person having ordinary skill in the art to comprehend and read, are not intended to define the defining conditions of the implementation of the disclosure, and therefore have no technical significance. Any structural modification, proportional relationship change, or size adjustment, without affecting the effects and objectives that can be achieved by the disclosure, should still fall within the scope of the technical content disclosed in the disclosure. Further, terms such as "upper", "lower", "left", "right", "middle", and "one" quoted in this specification are only for the convenience of description and are not used to define the applicable scope of the disclosure. The change or adjustment of its relative relationship should also be regarded as the applicable scope of the disclosure without substantive change of the technical content.

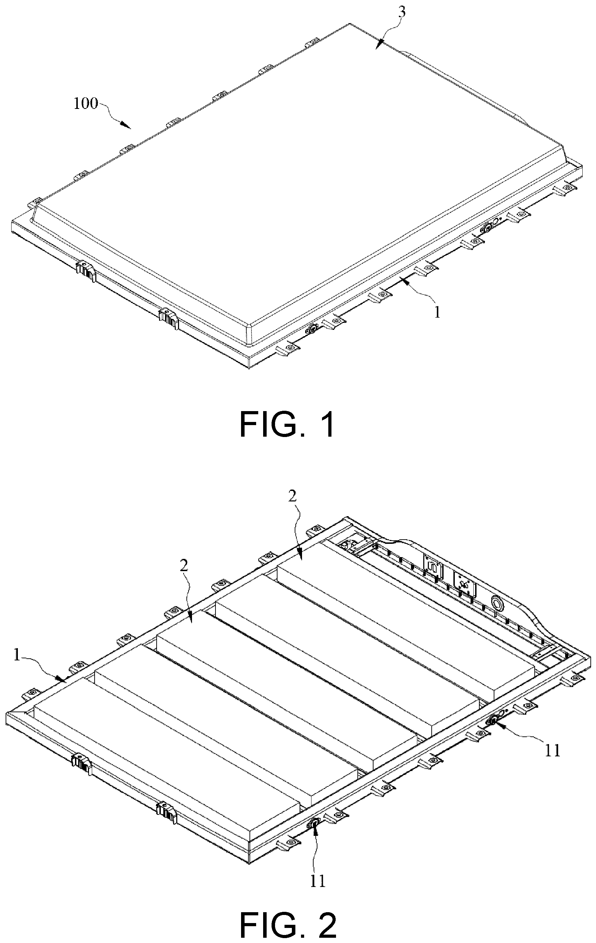

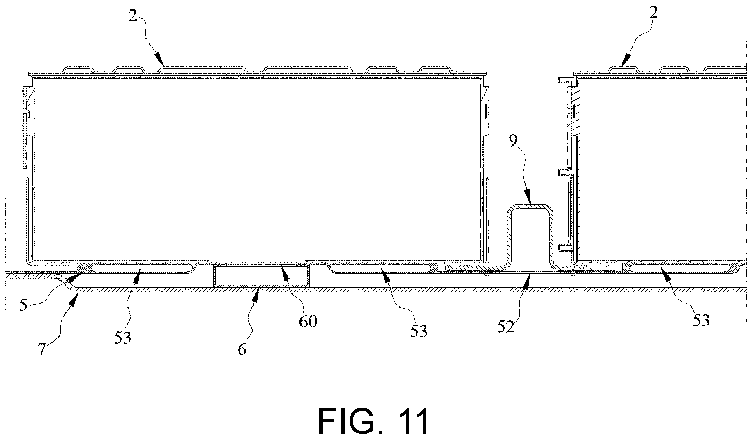

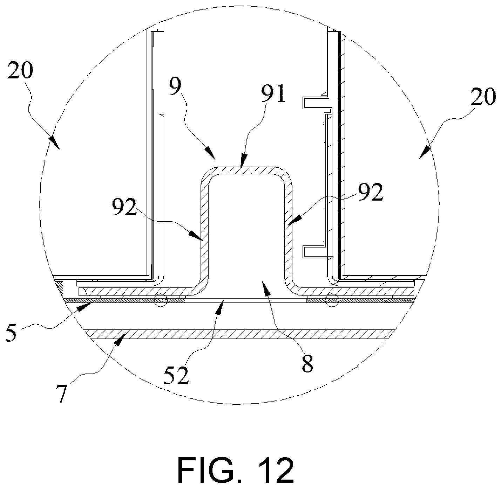

With reference to FIG. 1 to FIG. 20, this embodiment provides a battery pack 100 including a case 1 and cell assemblies 2 disposed in the case 1. The case 1 includes a heat exchange plate 5 and a bottom protection plate 7 disposed below the heat exchange plate 5, and the cell assemblies 2 are disposed on the heat exchange plate 5.

The heat exchange plate 5 may exchange heat with the cell assemblies 2, so that the cell assemblies 2 are in a suitable temperature range. As such, the working efficiency of the cell assemblies 2 is improved, and the risk of thermal runaway of the cell assemblies 2 is lowered. In some embodiments, the heat exchange plate 5 may be provided with refrigeration structures such as semiconductor refrigeration fins and heating structures such as heating fins, which may directly generate or absorb heat and exchange heat with the cell assemblies 2. In this embodiment, heat exchange flow channels 53 for circulating a heat exchange medium is provided in the heat exchange plate 5. The heat exchange medium flows in the heat exchange flow channels 53 and exchanges heat with the cell assemblies 2 through the heat exchange plate 5.

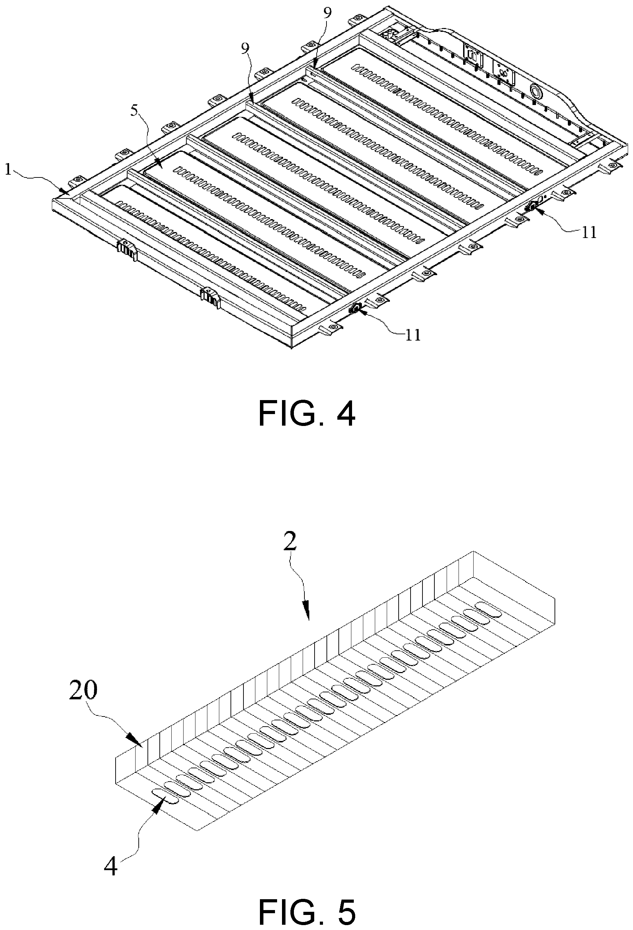

As shown in FIG. 5, one cell assembly 2 includes a plurality of cells 20, and an explosion-proof valve 4 is provided on a side of each of the cells 20 facing the heat exchange plate 5. In some embodiments, the cells 20 are cylindrical, and the cylindrical cells exhibit the advantages of mature winding technology, high production efficiency, and low costs. In this embodiment, the cells 20 are square, and the square cells exhibit the advantages of simple structures, easy arrangement, and high energy density.

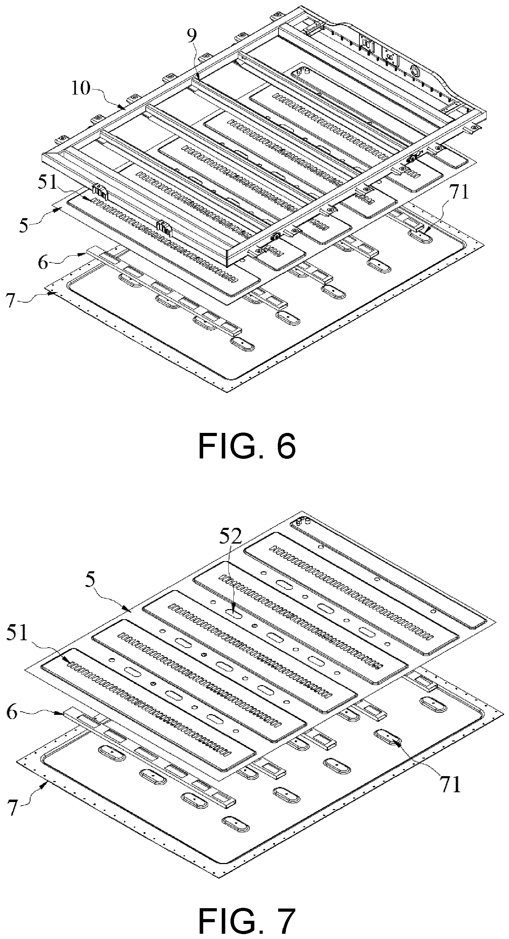

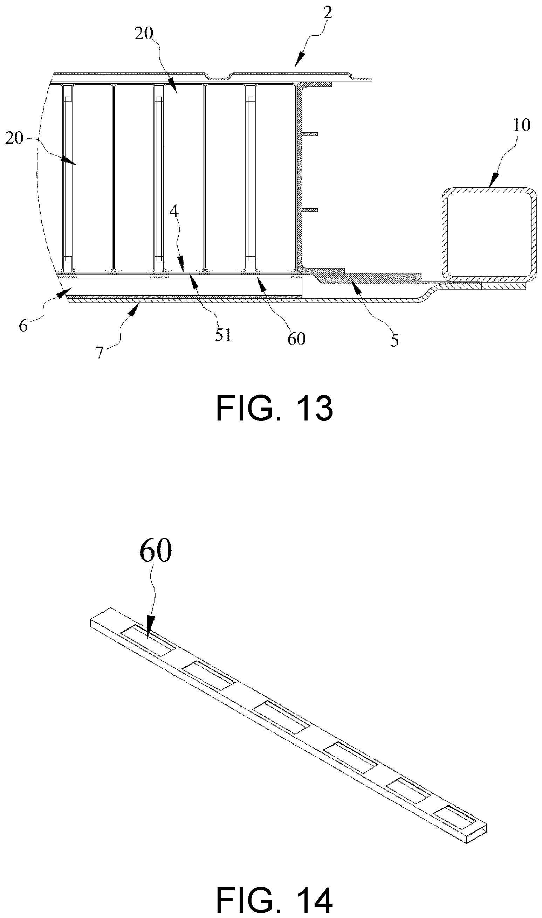

As shown in FIG. 7 and FIG. 13, the heat exchange plate 5 is provided with pressure relief through holes 51 corresponding to the explosion-proof valves 4. When the explosion-proof valves 4 of the cells 20 are opened, high-temperature and high-pressure substances ejected by the explosion-proof valves 4 may enter between the heat exchange plate 5 and the bottom protection plate 7 through the corresponding pressure relief through holes 51 for pressure relief. In this embodiment, the pressure relief through holes 51 are arranged to avoid the heat exchange flow channels 53 in the heat exchange plate 5, for example, between adjacent heat exchange flow channels 53, to prevent the heat exchange medium in the heat exchange flow channels 53 from leaking.

As shown in FIG. 1 and FIG. 5, in this embodiment, the battery pack 100 has a height direction, a width direction, and a length direction that are perpendicular to one another. The height direction of the battery pack 100 is the direction in which the explosion-proof valves 4 on the cells 20 are oriented, that is, the orientation direction of the pressure relief through holes 51. Dimensions of the battery pack 100 in the height direction, the width direction, and the length direction are not limited.

As shown in FIG. 6, FIG. 7, and FIG. 11, reinforcing members 6 are disposed between the heat exchange plate 5 and the bottom protection plate 7, and each of the reinforcing members 6 includes a base portion 61 and supporting portions 62 connected to the base portion 61. The base portion 61 is disposed on the bottom protection plate 7, and the supporting portions 62 are supported between the bottom protection plate 7 and the heat exchange plate 5. In the height direction of the battery pack 100, projection of the pressure relief through holes 51 at least partially overlap projection of the base portions 61.

The reinforcing members 6 support and strengthen the bottom protection plate 7 and the heat exchange plate 5. After the high-temperature and high-pressure substances enter between the heat exchange plate 5 and the bottom protection plate 7 through the pressure relief through holes 51, in the height direction of the battery pack 100, the portions where the projections of the base portions 61 of the reinforcing members 6 overlap the projections of the pressure relief through holes 51 may block the high-temperature and high-pressure substances. In this way, the corrosion and direct impact of the high-temperature and high-pressure substances on the bottom protection plate 7 is reduced, and the risk of the bottom protection plate 7 being penetrated is also lowered. In this embodiment, in the height direction of the battery pack 100, the projections of the pressure relief through holes 51 is entirely within the projection of the base portion 61. When the high-temperature and high-pressure substances pass through the pressure relief through holes 51 in the height direction of the battery pack 100, the high-temperature and high-pressure substances are all ejected on the base portions 61. When sizes of the base portions 61 remain unchanged, an effective protection area of the base portions 61 on the bottom protection plate 7 may be increased, and the protection effect generated by the base portions 61 on the bottom protection plate 7 may be improved.

The heat exchange plate 5 and the reinforcing members 6 may be connected by laser penetration welding, riveting connection, gluing, etc. The reinforcing members 6 may also be connected to the bottom protection plate 7 through various methods such as laser penetration welding, bonding, riveting connection, bolt connection, etc. In this embodiment, as shown in FIG. 6, mounting bosses 71 protruding toward the heat exchange plate 5 is provided on the bottom protection plate 7 at positions corresponding to the reinforcing members 6. Each of the mounting bosses 71 is provided with a bolt hole, and the reinforcing members 6 are connected onto the mounting bosses 71 through bolts. The mounting bosses 71 may reduce a matching area between the bottom protection plate and the reinforcing members 6, so that the overall processing difficulty of the bottom protection plate 7 is lowered.

In this embodiment, the cells 20 of the cell assemblies 2 are stacked in sequence in the width direction of the battery pack 100. Correspondingly, as shown in FIG. 6 and FIG. 7, the pressure relief through holes 51 of the heat exchange plate 5 are also arranged in sequence in the width direction of the battery pack 100. Each of the base portions 61 is in a long strip shape and extends in the width direction of the battery pack 100, so that the base portions 61 may correspond to the pressure relief through holes 51 in the width direction of the battery pack 100.

As shown in FIG. 14 to FIG. 18, in this embodiment, each of the supporting portions 62 is in a long strip shape extending in the width direction of the battery pack 100. The supporting portions 62 are disposed on both sides of the base portion 61 in the length direction of the battery pack 100, and each of the pressure relief through holes 51 is disposed between the two supporting portions 62. Since each of the pressure relief through holes 51 is disposed correspondingly between the two supporting portions 62, the high-temperature and high-pressure substances discharged from the pressure relief through holes 51 may enter between the two supporting portions 62. The two supporting portions 62 may block the high-temperature and high-pressure substances between the two supporting portions 62 and constrain a discharge trajectory of the high-temperature and high-pressure substances, so that damage to the battery pack structure outside the reinforcing members 6 by the high-temperature and high-pressure substances is decreased.

Further, in this embodiment, the cell assemblies 2 and the heat exchange plate 5 are bonded through structural glue and thermally conductive glue. Gaps between the cell assemblies 2 and the heat exchange plate 5 filled with structural glue and thermal conductive glue is beneficial to blocking the high-temperature and high-pressure substances. In this way, the risk of the high-temperature and high-pressure substances overflowing to other locations in the case 1 and causing chain thermal runaway of the cells 20 is lowered.

In this embodiment, lifting portions 63 extending in the width direction of the battery pack 100 are further disposed on edges of the supporting portions 62 close to the heat exchange plate, and the lifting portions 63 are attached to the heat exchange plate 5. The lifting portion 63 may increase the contact areas between the supporting portions 62 and the heat exchange plate 5, so that the extrusion stress between the supporting portions 62 and the heat exchange plate 5 is reduced, and the strength of the heat exchange plate 5 is improved.

To be specific, as shown in FIG. 14 to FIG. 17, in some embodiments, two lifting portions 63 extend toward each other, that is, each of the lifting portions 63 is located between the two supporting portions 62 and is connected to the two supporting portions 62. The lifting portions 63 are provided with receiving through holes 60 corresponding to the pressure relief through holes 51. Each lifting portion 63 is located between the two supporting portions 62, so that the folding moment endured by the reinforcing member 6 may be reduced and the reinforcing member 6 may be prevented from being deformed.

To be specific, each of the reinforcing members 6 is a square tube extending in the width direction of the battery pack 100 in this embodiment. In the height direction of the battery pack 100, the bottom of the square tube is the base portion 61, the outer walls on both sides of the bottom are the supporting portions 62, and the top of the square tube is the lifting portion 63. Each receiving through hole 60 may be sequentially opened on the top of the square tube in the length direction of the square tube through punching or other machine processing methods. The square tube may be purchased directly according to the specifications without mold re-opening and processing, so that the production costs of the reinforcing members 6 are reduced.

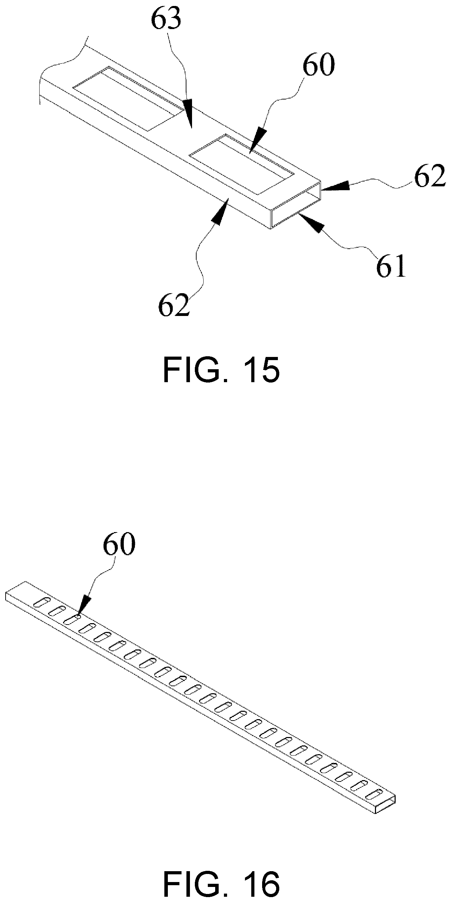

As shown in FIG. 14 and FIG. 15, in some embodiments, the number of the receiving through holes 60 is less than the number of the pressure relief through holes 51, and one of the receiving through holes 60 is disposed corresponding to plural pressure relief through holes 51. The arrangement of one receiving through hole 60 corresponding to multiple pressure relief through holes 51 may allow the number of the receiving through holes 60 to be reduced and the processing costs to be lowered.

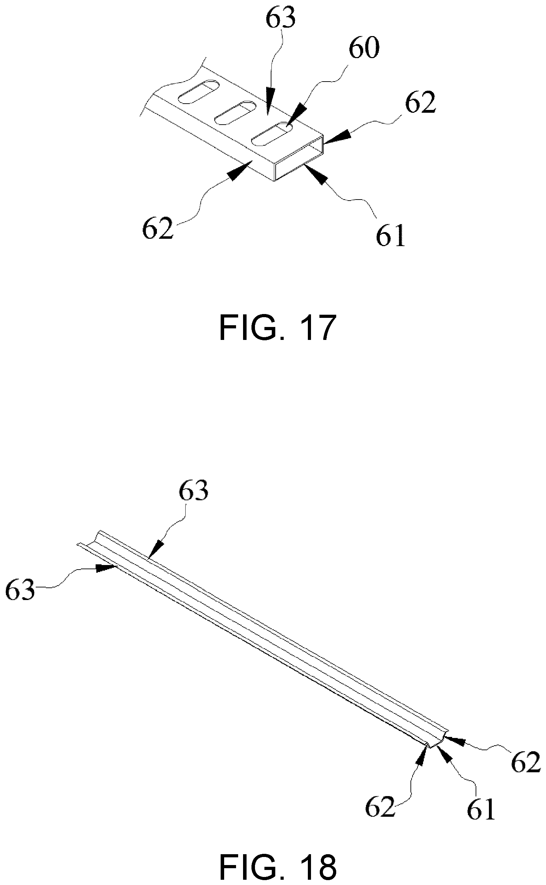

As shown in FIG. 16 and FIG. 17, in other embodiments, the number of the receiving through holes 60 may also correspond to the number of the pressure relief through holes 51, and the receiving through holes 60 and the pressure relief through holes 51 are arranged in one-to-one. Compared to the arrangement one receiving through hole 60 corresponding to multiple pressure relief through holes 51, the one-to-one arrangement of the receiving through holes 60 and the pressure relief through holes 51 makes the contact area between the reinforcing members 6 and the heat exchange plate 5 larger. In this way, the lifting effect of lifting the heat exchange plate 5 is improved and stress concentration is reduced.

As shown in FIG. 18 to FIG. 20, in some embodiments, the two lifting portions 63 extend away from each other, that is, each of the two supporting portions 62 is provided with the lifting portion 63. The lifting portion 63 is located on a side of the corresponding supporting portion 62 away from the other supporting portion 62. To be specific, the lifting portion 63 is a flange formed by the edge of the supporting portion 62 close to the heat exchange plate 5 being folded and extending toward the outside of the supporting portion 62. The base portion 61, the supporting portions 62, and the lifting portions 63 of each reinforcing member 6 may all be formed from plate materials through a stamping process. The stamping processing is a simple process and has the advantages of low costs and high processing efficiency. In this embodiment, an included angle between the base portion 61 and each of the supporting portions 62 is an obtuse angle, so that the space between the two supporting portions 62 is increased, and the high-temperature and high-pressure substances may be quickly discharged from the reinforcing members 6.

As shown in FIG. 2 to FIG. 7, in this embodiment, plurality cell assemblies 2 are provided in the case 1, and the cell assemblies 2 are disposed side by side in sequence in the length direction of the battery pack 100 on the heat exchange plate 5. Plural reinforcing members 6 are provided, and the reinforcing members 6 are disposed side by side corresponding to the cell assemblies 2. Increasing the number of the cell assemblies 2 may increase the total energy storage capacity of the battery pack. Increasing the number of the reinforcing members 6 may improve the structural strength of the heat exchange plate 5 and the bottom protection plate 7. Further, the reinforcing members 6 are arranged corresponding to the cell assemblies 2, so that the extrusion stress of the cell assemblies 2 on the heat exchange plate 5 is relieved, and the heat exchange plate 5 is better supported.

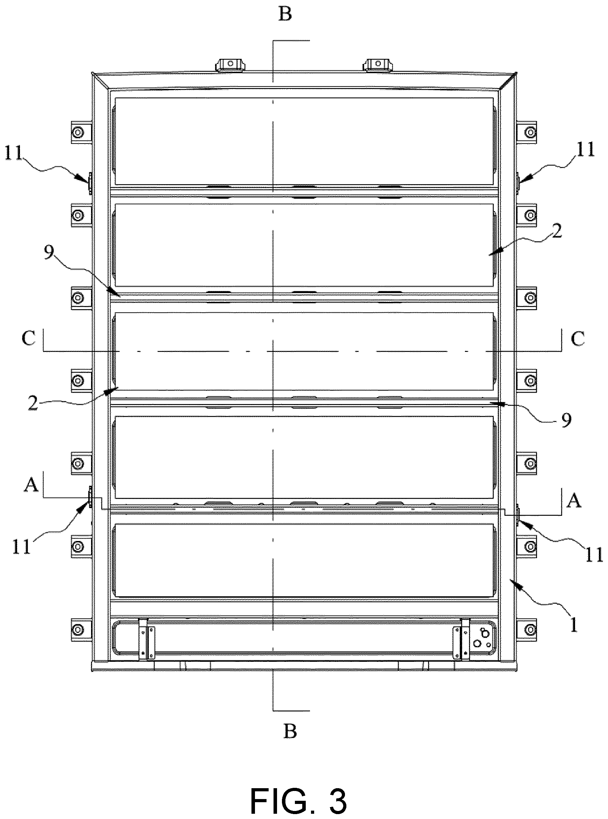

As shown in FIG. 3 to FIG. 11, in this embodiment, separating beams 9 extending in the width direction of the battery pack 100 is provided on a side of the heat exchange plate 5 away from the bottom protection plate 7, and each of the separating beams 9 is located between the two adjacent cell assemblies 2. In this embodiment, separating beams 9 are provided between adjacent battery cell assemblies 2 in the length direction of the battery pack 100. The separating beams 9 may support an outer wall of the case 1 in the width direction of the battery pack 100 and improve the structural strength of the case 1. Further, each of the separating beams may separate the cell assemblies 2 on both sides of the separating beams 9. When the cells 20 in one cell assembly 2 on one side of the separation beam 9 are thermally runaway, the separation beam 9 may block the high-temperature and high-pressure substances and reduce the impact of the thermally runaway cell assembly 2 on the adjacent cell assembly 2.

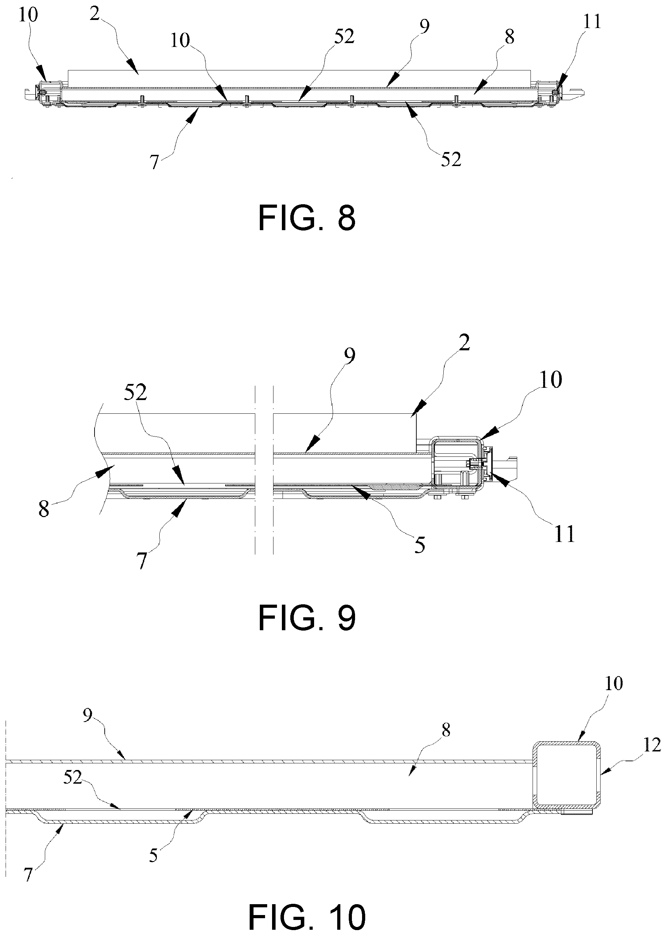

As shown in FIG. 8 to FIG. 10, in this embodiment, both ends of each of the separating beams 9 are connected to an inner wall of the case 1, and a discharge through hole 12 is provided on an outer wall of the case 1 corresponding to an end portion of the separating beam 9. A discharge channel 8 communicating with the discharge through hole 12 is provided in the separating beam 9, and a communicating through hole 52 communicating with the discharge channel 8 is provided on the heat exchange plate 5 corresponding to the separating beam 9. The heat exchange plate 5 and the bottom protection plate 7 communicate with the discharge through hole 12 through the communicating through hole 52 and the discharge channel 8.

After the thermal runaway of the cells 20, the high-temperature and high-pressure substances discharged between the heat exchange plate 5 and the bottom protection plate 7 may enter the discharge channel 8 through the communicating through hole 52 and then are discharged out of the battery pack 100 through the discharge channel 8 and the discharge through hole 12. The discharge channel 8 is arranged in the separating beam 9, so no additional arrangement space is required, so that a volume of the battery pack 100 is reduced and the energy density of the battery pack 100 is increased.

In order to reduce the volume of the battery pack 100 and increase the energy density of the battery pack 100, the size between the heat exchange plate 5 and the bottom protection plate 7 in the height direction of the battery pack 100 is usually relatively narrow. The size of the outer wall of the case 1 corresponding to the height direction of the battery pack 100 between the heat exchange plate 5 and the bottom protection plate 7 is correspondingly narrow, making it difficult to arrange the discharge through hole 12. In this embodiment, the separating beam 9 is provided on the side of the heat exchange plate 5 away from the bottom protection plate 7, so that the outer wall of the case 1 has a sufficient arrangement space on the side of the heat exchange plate 5 away from the bottom protection plate 7 in the height direction of the battery pack 100. The discharge through hole 12 is arranged on the outer wall of the case 1 corresponding to the end portion of the separating beam 9 on the side of the heat exchange plate 5 away from the bottom protection plate 7. In this way, the arrangement space of the discharge through hole 12 may be increased, the size of the discharge through hole 12 in the height direction of the battery pack 100 is increased, and the discharge efficiency of the high-temperature and high-pressure substances is further improved.

As shown in FIG. 6 and FIG. 8 to FIG. 10, in this embodiment, the outer wall of the case 1 is a side beam 10 with a tubular structure formed by rolling and processing of high-strength steel. The tubular structure exhibits the advantages of high strength and light weight, so that the overall structural strength of the case 1 may be improved. The end portion of the separating beam 9 communicates with the inside of the side beam 10. The discharge through hole 12 is opened on the side of the side beam 10 close to the outside of the case 1, and the discharge channel 8 in the separating beam 9 communicates with the discharge through hole 12 through the side beam 10.

To be specific, as shown in FIG. 6, FIG. 11, and FIG. 12, in this embodiment, the separating beam 9 includes a top portion 91 extending in the width direction of the battery pack 100. The top portion is located above the heat exchange plate 5 and two side portions 92 are provided on both sides of the top portion toward the heat exchange plate 5. The side portions are connected to the heat exchange plate 5 and are enclosed with the heat exchange plate 5 and the top portion to form the discharge channel 8. In this embodiment, the edge of each of the side portions 92 is also provided with a flange to be attached to the heat exchange plate 5, so as to facilitate the attachment of the separating beam 9 and the heat exchange plate 5. The top portion 91, the side portions 92, and the flanges of the separating beam 9 may be integrally stamped and formed from plates, which has a simple process and requires low costs. The side portions 92 of the separating beam 9 are connected onto the heat exchange plate 5. The side portions 92, the top portion 91, and the heat exchange plate 5 are closed to form the discharge channel 8, so that there is no need to provide additional structures to form the discharge channel 8, which can make the battery pack 100 lighter and reduce the material costs.

As shown in FIG. 1 to FIG. 10, in this embodiment, the discharge through holes 12 are provided with waterproof and breathable valves 11. The waterproof and breathable valves 11 open when the high-temperature and high-pressure gas is discharged, so that the high-temperature and high-pressure substances in the case 1 may be discharged in time. The waterproof and breathable valves 11 are closed before the high-temperature and high-pressure gas is discharged, is breathable, and may prevent dust and other impurities outside the case 1 from entering the case 1 while balancing the pressure inside and outside the case 1, so that the service life of the battery pack 100 is thereby increased.

In some embodiments, a protection layer 64 is provided on a side of the base portion 61 of the reinforcing member 6 facing the pressure relief through hole 51. In some other embodiments, the protection layer 64 is also provided on sides of the supporting portions 62 of the reinforcing member 6 close to the base portion 61. Providing the protection layer 64 partially on the reinforcing member 6 may reduce the arrangement area of the protection layer 64 and reduce a weight and material costs of the battery pack 100.

As shown in FIG. 18 to FIG. 20, in this embodiment, the protection layer 64 is provided on the side of the base portion 61 of the reinforcing member 6 facing the pressure relief through hole 51 and the sides of the supporting portions 62 close to the base portion 61. In this way, the protection range of the protection layer 64 is increased, and the protective effect on the reinforcing member 6 is improved. The protection layer 64 may reduce the impact, corrosion, or burning of the reinforcing members 6 caused by the high-temperature and high-pressure gas, so the risk of the bottom protection plate 7 being penetrated by the high-temperature and high-pressure gas is further reduced.

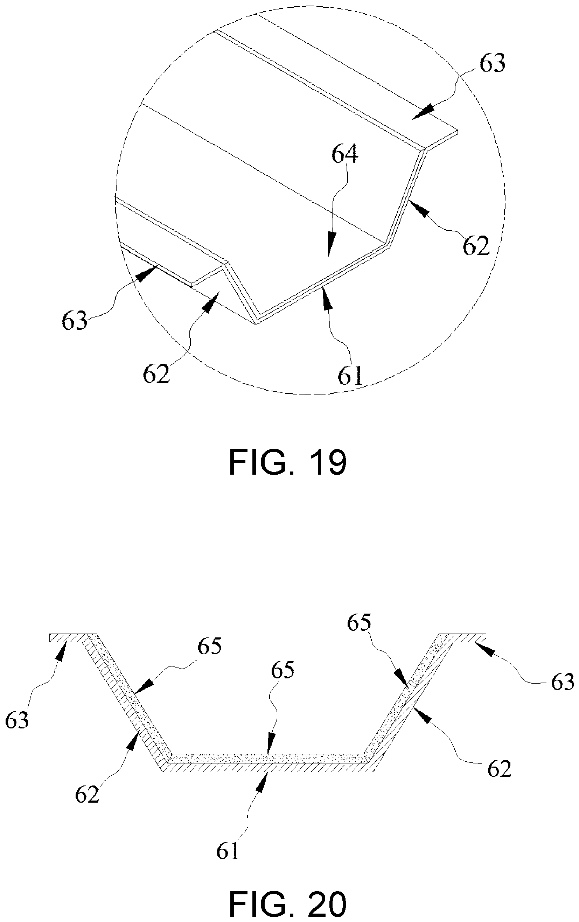

In some embodiments, the protection layer 64 may be a ceramic, silicate, phosphate, or other coating coated on the reinforcing members 6 and has high temperature resistance and certain structural strength, so that the protection layer 64 may reduce the impact and burning of the reinforcing member 6 by the high-temperature and high-pressure gas. As shown in FIG. 20, in this embodiment, the protection layer 64 is made of mica plates 65. The mica plates 65 may be fixed on the reinforcing members 6 through bonding, bolting, etc., and exhibit the advantages of light weight, good high temperature resistance and insulation performance, and high cost performance.

In this embodiment, the bottom protection plate 7 may be made of aluminum, a composite material, a steel plate, and other materials, and the reinforcing members 6 may be made of aluminum or stainless steel. Aluminum is light in weight, which is beneficial to reducing the weight of the battery pack and improving the energy density of the battery pack. Stainless steel has good corrosion resistance and high strength, which is beneficial to improving the structural strength between the heat exchange plate 5 and the bottom protection plate 7.

In view of the foregoing, in the battery pack provided by the disclosure, the cell assemblies 2 are disposed on the heat exchange plate 5, and each of the cell assemblies 2 includes plural cells 20. The explosion-proof valves 4 of the cells 20 are all disposed on the sides of the cells 20 facing the heat exchange plate 5, and the heat exchange plate 5 is provided with the pressure relief through holes 51 corresponding to the explosion-proof valves 4. In this way, when the explosion-proof valves 4 of the cells 20 are opened, the high-temperature and high-pressure substances ejected by the explosion-proof valves 4 may enter between the heat exchange plate 5 and the bottom protection plate 7 through the corresponding pressure relief through holes 51 for pressure relief. The reinforcing members 6 are disposed between the heat exchange plate 5 and the bottom protection plate 7, and each of the reinforcing members 6 includes the base portion 61 and the supporting portions 62 connected to the base portion 61. The base portions 61 are disposed on the bottom protection plate 7, and the supporting portions 62 are supported between the bottom protection plate 7 and the heat exchange plate 5. In the height direction of the battery pack, the projections of the pressure relief through holes 51 at least partially overlap the projections of the base portions 61. Therefore, the reinforcing members 6 support and strengthen the bottom protection plate 7 and the heat exchange plate 5. Further, after the high-temperature and high-pressure substances enter between the heat exchange plate 5 and the bottom protection plate 7 through the pressure relief through holes 51, in the height direction of the battery pack 100, the portions where the projections of the base portions 61 of the reinforcing members 6 overlap the projections of the pressure relief through holes 51 may block the high-temperature and high-pressure substances. In this way, the direct impact and corrosion of the high-temperature and high-pressure substances on the bottom protection plate 7 is reduced, and the risk of the bottom protection plate 7 being penetrated is also lowered.

## Claims

1. A battery pack (100), **characterized by** comprising a case (1) and cell assemblies (2) disposed in the case (1), wherein the case (1) comprises a heat exchange plate (5) and a bottom protection plate (7) disposed below the heat exchange plate (5), and the cell assemblies (2) are disposed on the heat exchange plate (5),
each of the cell assemblies (2) comprises a plurality of cells (20), an explosion-proof valve (4) is provided on a side of each of the cells (20) facing the heat exchange plate (5), and the heat exchange plate (5) is provided with pressure relief through holes (51) corresponding to the explosion-proof valves (4),
reinforcing members (6) are disposed between the heat exchange plate (5) and the bottom protection plate (7), each of the reinforcing members (6) comprises a base portion (61) and supporting portions (62) connected to the base portion (61), the base portion (61) is disposed on the bottom protection plate (7), the supporting portions (62) are supported between the bottom protection plate (7) and the heat exchange plate (5), and in a height direction of the battery pack (100), projection of the pressure relief through holes (51) at least partially overlap projection of the base portions (61).

2. The battery pack (100) according to claim 1, **characterized in that** the pressure relief through holes (51) are arranged in sequence in a width direction of the battery pack (100), and each of the base portions (61) is in a long strip shape and extends in the width direction of the battery pack (100).

3. The battery pack (100) according to claim 2, **characterized in that** each of the supporting portions (62) is in a long strip shape extending in the width direction of the battery pack (100), the supporting portions (62) are provided on both sides of the base portion (61) in a length direction of the battery pack (100), and each of the pressure relief through holes (51) is disposed between the two supporting portions (62).

4. The battery pack (100) according to claim 3, **characterized in that** lifting portions (63) extending in the width direction of the battery pack (100) are further provided on edges of the supporting portions (62) close to the heat exchange plate (5), and the lifting portions (63) are attached to the heat exchange plate (5).

5. The battery pack (100) according to claim 4, **characterized in that** the two supporting portions (62) are provided with the lifting portions (63), and the two lifting portions (63) extend away from each other.

6. The battery pack (100) according to claim 5, **characterized in that** an included angle between the base portion (61) and each of the supporting portions (62) is an obtuse angle.

7. The battery pack (100) according to claim 4, **characterized in that** the two lifting portions (63) extend toward each other, and the lifting portions (63) are provided with receiving through holes (60) corresponding to the pressure relief through holes (51).

8. The battery pack (100) according to claim 7, **characterized in that** a number of the receiving through holes (60) is less than a number of the pressure relief through holes and one of the receiving through holes (60) is disposed corresponding to plural of the pressure relief through holes (51), or the number of the receiving through holes (60) corresponds to the number of the pressure relief through holes (51), and the receiving through holes (60) and the pressure relief through holes (51) are arranged in one-to-one.

9. The battery pack (100) according to any one of claims 1-8, **characterized in that** plural cell assemblies (2) are provided, the cell assemblies (2) are disposed side by side in sequence in a length direction of the battery pack (100) on the heat exchange plate (5), plural reinforcing members (6) are provided, and the reinforcing members (6) are disposed side by side corresponding to the cell assemblies (2).

10. The battery pack (100) according to claim 9, **characterized in that** separating beams (9) extending in a width direction of the battery pack (100) are provided on a side of the heat exchange plate (5) away from the bottom protection plate (7), and each of the separating beams (9) is located between the two cell assemblies (2) adjacent to each other.

11. The battery pack (100) according to claim 10, **characterized in that** both ends of each of the separating beams (9) are connected to an inner wall of the case (1), a discharge through hole (12) is provided on an outer wall of the case (1) corresponding to an end portion of the separating beam (9), a discharge channel (8) communicating with the discharge through hole (12) is provided in the separating beam (9), a communicating through hole (52) communicating with the discharge channel (8) is provided on the heat exchange plate (5) corresponding to the separating beam (9), and the heat exchange plate (5) and the bottom protection plate (7) communicate with the discharge through hole (12) through the communicating through hole (52) and the discharge channel (8).

12. The battery pack (100) according to claim 11, **characterized in that** each of the separating beams (9) comprises a top portion (91) extending in the width direction of the battery pack (100), the top portion (91) is located above the heat exchange plate (5), two side portions (92) are provided on both sides of the top portion (91) toward the heat exchange plate (5), and the side portions (92) are connected onto the heat exchange plate (5) and are enclosed with the heat exchange plate (5) and the top portion (91) to form the discharge channel (8).

13. The battery pack (100) according to claim 11, **characterized in that** the discharge through holes (12) are provided with waterproof and breathable valves (11).

14. The battery pack (100) according to any one of claims 1-8, **characterized in that** in the height direction of the battery pack (100), the projection of the pressure relief through holes (51) are within the projection of the base portions (61).

15. The battery pack (100) according to any one of claims 1-8, **characterized in that** a protection layer (64) is provided on at least one of a side of the base portion (61) facing the pressure relief through hole (51) and a side of the supporting portion (62) close to the base portion (61).
